## Europäisches Patentamt
## European Patent Office
## Office européen des brevets

(11) Publication number: **0 162 925**
**B1**

(12) **EUROPEAN PATENT SPECIFICATION**

(45) Date of publication of patent specification: **01.03.89**

(51) Int. Cl.⁴: **H 01 J 9/227**, H 01 J 29/20

(21) Application number: **84903979.7**

(22) Date of filing: **25.10.84**

(86) International application number:
**PCT/JP84/00507**

(87) International publication number:
**WO 85/02056 09.05.85 Gazette 85/11**

(54) **METHOD OF MANUFACTURING FLUORESCENT SCREEN OF CATHODE-RAY TUBE.**

(30) Priority: **31.10.83 JP 203960/83**

(43) Date of publication of application:
**04.12.85 Bulletin 85/49**

(45) Publication of the grant of the patent:
**01.03.89 Bulletin 89/09**

(84) Designated Contracting States:
**DE FR GB**

(56) References cited:
**EP-A-0 097 377**
**JP-A-58 176 853**
**JP-A-59 105 247**
**JP-A-59 105 248**

(73) Proprietor: **SONY CORPORATION**
**7-35 Kitashinagawa 6-Chome Shinagawa-ku Tokyo 141 (JP)**

(72) Inventor: **AKIBA, Yukio**
**Sony Corporation 7-35, Kitashinagawa 6-chome Shinagawa-ku Tokyo 141 (JP)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to producing phosphor screens of cathode ray tubes.

In a so-called character display apparatus for displaying very small patterns such as characters, symbols, figures or the like in a terminal display apparatus, in order to afford a picture or image of high definition a scanning system employing sequentially scanning of the scanning lines is employed instead of a conventional 2 field 1-frame interlaced scanning system so as to avoid the scanning lines of each field being displaced in position from each other. In this case, if the display screen is refreshed at a rate which will provide a frame rate which is the same as that of the interlaced scanning system, the scanning speed of the electron beam must be twice as high as that of the interlaced scanning system. This results in the signal bandwidth becoming large or in the power for the deflecting means becoming large. Therefore, in a character display apparatus serving as a terminal display apparatus of this kind, a still picture is used very frequently so that the display screen is refreshed at a rate of about 30 to 50 times per second. Accordingly, if a display apparatus of this kind uses a phosphor as generally used in a conventional television picture tube of the interlaced scanning system, considerable flickering of the picture will occur. Therefore, a cathode ray tube of apparatus of this kind uses a long-persistence phosphor whose decay time lies in a range of from several milliseconds to several tens of milliseconds. (Generally, the term "decay time" represents the time taken for the brightness of the light emission to decrease to 1/10 of its initial value). However, if the character display apparatus has a mode of use enabling address detection to be carried out by using a light pen, since it is necessary that the moment when the electron beam passes through the phosphor screen be detected by the light pen, in a range where an output is produced, the decay time of the phosphor must be short as possible in order to increase the pick-up or detection accuracy. Thus, a short-persistence phosphor which has a decay time of the order of microseconds is necessary.

Thus, a cathode ray tube of this kind requires a long-persistence phosphor to provide a picture which can be seen by the unaided eyes and a short-persistence phosphor to enable address detection to be carried out by using a light pen because a detection pulse of very short duration must be provided. These requirements conflict with each other.

Accordingly, in a cathode ray tube of this kind which has, for example, a colour phosphor screen, long-persistence phosphors are used for the green and red phosphors of the phosphor screen while a short-persistence phosphor is used for the blue phosphor, which has relatively low visibility. In this case, however, notwithstanding the low visibility of the blue phosphor, since it is a short-persistence phosphor a slight flicker in the picture is caused.

Another prior proposal uses a mixture of a long-persistence phosphor and a short-persistence phosphor of the same colour and the detecting means detects only the level at which both phosphors are rendered luminous at the same time. In this case, however, it is in practice very difficult to select the mixing ratio of the phosphors such that flicker of the picture can be suppressed while the pick-up accuracy can be increased. If the amount of the short-persistence phosphor in the mixture is very large, flicker of the picture becomes conspicuous. If, on the other hand, it is small, the signal to noise ratio grows worse to lower the pick-up accuracy of the light pen whereby positive address detection cannot be made without difficulty.

To overcome such shortcomings, a phosphor screen could be formed by separately coating on the inner surface of the panel of a cathode ray tube: (i) phosphors which have a decay time of, for example, greater than 1 millisecond and which emit visible light, for example light rays of the colours red, green and blue, when impinged upon by an electron beam; and (ii) a phosphor which has a decay time of less than 10 microseconds and which emits light outside of the visible range, for example ultraviolet rays, infrared rays and so on, when impinged upon by an electron beam, to be detected or picked up by the light pen. More particularly, for example, in the case of a colour phosphor screen, the phosphors which emit red, green and blue light are formed to have a predetermined pattern comprising stripes or dots and the phosphor which emits the light to be picked up or detected by a light pen is formed such that it is located between the adjacent colour phosphors as seen from the front of the phosphor panel of the cathode ray tube.

According to the present invention there is provided a method for producing a phosphor screen of a cathode ray tube, the method comprising the steps of forming a photo-sensitive material layer with a predetermined pattern on the inner surface of a panel of the cathode ray tube, coating the whole of the inner surface of the panel, including said photo-sensitive material layer, with a phosphor slurry capable of producing light that can be picked up by a light pen, and removing said photo-sensitive material layer to thereby form a light pen pick-up phosphor pattern which is complementary to said predetermined pattern, said phosphor slurry comprising slica, polyvinyl alcohol and phosphor, characterised in that, if the amount (weight) of silica is taken as S, the amount (weight) of solid component of polyvinyl alcohol is taken as B and the amount (weight) of phosphor is taken as P, the ratio S/B is selected to lie in a range of from 1 to 15 and the ratio P/B is selected to lie in a range of from 5 to 30.

The invention thus provides a method for producing a phosphor screen of a cathode ray tube by which the light pen pick-up phosphor pattern can be produced positively.

A preferred method embodying the present invention and described hereinbelow enables the production of a phosphor screen of a cathode ray tube in which, on spaces between phosphors which emit visible light and which are arranged in a predetermined pattern comprising, for example, stripes or dots, the phosphor to produce light to be detected or picked up by a light pen is separately coated.

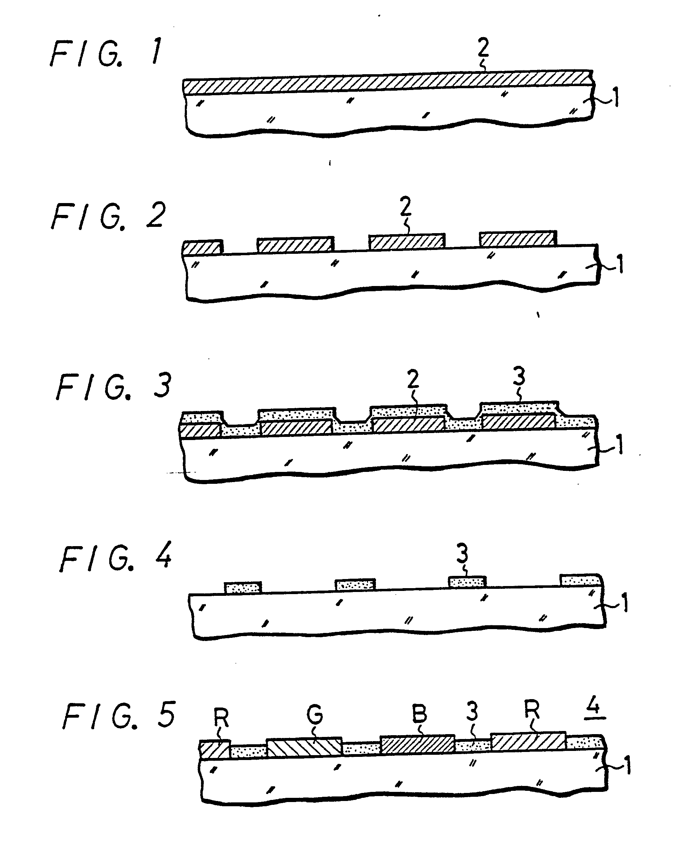

The invention will now be further described, by way of illustrative and non-limiting example, with reference to the accompanying drawing, in which Figures 1 to 5 are diagrams showing respective process stages of a method embodying the invention for producing a colour phosphor screen of a cathode ray tube.

A method embodying the invention for producing a colour phosphor screen of a cathode ray tube of a light pen pick-up system will now be described with reference to the drawing.

As shown in Figure 1, a photo-sensitive material layer 2, which is made of polyvinyl alcohol (PVA) and ammonium dichromate (ADC), is formed by coating on the whole of the inner surface of a panel or face plate 1 of the cathode ray tube on which the phosphor screen is to be formed.

An electron beam landing position determining means (not shown), for example an aperture grille which has a large number of slits aligned parallel with one another and which is intended to be positioned appropriately with respect to the panel 1, for example in opposing relation to the phosphor screen, when construction of the cathode ray tube is completed, is disposed in a position which is the same as that it adopts in the completed cathode ray tube and is used as a mask to expose the photo-sensitive material layer 2. Thus, the light which is used to expose the photo-sensitive material layer 2 contacts the layer 2 where phosphors of respective colours will be contacted by an electron beam in the completed cathode ray tube.

The photo-sensitive material layer 2 is then developed and the non-exposed portions are removed to leave the structure shown in Figure 2. Thus, the photo-sensitive material layer 2 is formed to have a predetermined pattern, which pattern comprises stripes.

Thereafter, as shown in Figure 3, a phosphor layer 3 is formed on the whole surface of the panel 1, including the photo-sensitive material layer 2 formed in the predetermined pattern. The phosphor layer 3 comprises a slurry of a phosphor which emits infrared rays or ultraviolet rays that can be picked up by a light pen. As shown in Figure 4, the photo-sensitive material layer 2 is removed by a solvent therefor, i.e. an inverting agent such as hydrogen peroxide ($H_2O_2$) solution. Since the photo-sensitive material layer 2 is removed, the portions of the phosphor layer 3 formed on the layer 2 are selectively removed or lifted-off so that only the portions of the phosphor layer 3 which are directly deposited on the inner surface of the panel 1 are left. Thus, the phosphor layer 3 is formed in to a striped pattern which is complementary to (or, in other words, an inversion of) the above-described predetermined striped pattern of the photo-sensitive material layer 2.

After that, as shown in Figure 5, red, green and blue phosphor stripes R, G and B are formed by a known method between the strip-like portions of the phosphor layer 3 for use in light pen pick-up, whereby a desired colour phosphor screen 4 is formed.

The so-called inverting method or lift-off method used to form the phosphor layer 3 in a pattern complementary to that of the photo-sensitive material layer 2 cannot make use of a conventional phosphor slurry. In this connection, while such an inverting method is used to coat a carbon layer which forms so-called black stripes in a phosphor screen of a colour cathode ray tube such as that of a conventional television picture tube, this method cannot be applied in the case of a conventional phosphor slurry. This is because, while the carbon coating material has a carbon particle diameter of less than 0.5 micrometres, a specific gravity of about 2 and a coating thickness of less than 1 micrometre, the conventional phosphor slurry has a phosphor particle diameter in a range of from 5 to 10 micrometres and a specific gravity of around 4. Accordingly, to avoid problems of aggregation, sedimentation and so on, a special composition is selected for the phosphor slurry used to make the phosphor layer 3 described with reference to Figure 3.

Thus, the phosphor slurry is made of phosphor, coloidal silica, binder PVA used as a thickening agent to provide for coagulation and sedimentation of the phosphor, and water. The silica is added to prevent the portions of the phosphor layer 3 which are directly coated on the panel 1 (and which are to remain in place) being removed together with the portions of the phosphor slurry on the photo-sensitive material layer 2 when the treatment with the inverting agent $H_2O_2$ for the photo-sensitive material layer 2 takes place, the layer 2 being made of PVA and ADC with the PVA being used as a binder. The phosphor slurry can, for example, have the following composition:

| | |
|---|---|
| phosphor | 100 g |
| pure water | 150 ml |
| coloidal silica (aqueous solution containing 30 weight % of silica whose product name is LUDOX (trade mark) manufactured by The Du Pont Company) | 140 ml; and |
| PVA (aqueous solution containing 8 weight % of PVA whose product name is GOTHENOL (trade mark) manufactured by Nippon Synthetic Chemical Industries Co., Ltd.) | 150 g |

In the phosphor slurry, the ratio S/B between the amount (weight) S of silica and the amount (weight) B of PVA is selected to lie in a range of from 1 to 15, and the ratio P/B between the amount (weight) P of phosphor and the amount B of PVA is selected to lie in a range of from 5 to 30.

The reason why the ratio S/B is selected to lie in the range of from 1 to 15 is that, if S/B is less than 1, the bonding force is lowered, while, if S/B exceeds 15, the inverting property is lowered. The reason why the ratio P/B is selected to lie in the range of from 5 to 30 is that, if P/B is less than 5, the packing density of the phosphor is too low, while, if it exceeds 30, the keeping quality of the coating layer is lowered.

Although, in the above-described embodiment, the photo-sensitive material layer is made of ADC and PVA, it is possible to use a photo-sensitive material based on an azide system.

Although, in the above-described embodiment, the present invention is applied to producing a color phosphor screen, the invention can be applied to producing a monochromatic phosphor screen. Also in this case, it is possible to form a phosphor screen in which the phosphor capable of producing a visible image is formed to have a pattern which, for example, comprises stripes, and in which phosphor stripes which emit ultraviolet or infrared rays for use in light pen pick-up are located between the first-mentioned stripes.

As set forth above, according to an embodiment of this invention a phosphor screen in which separately formed phosphors for producing visible light and for producing light outside of the visible range for detection or picking up by a light pen can be produced positively by the application of an inverting method to the light pen pick-up phosphor and selection of the composition of its slurry. Since, in the resultant phosphor screen, the phosphor for producing visible light may be a phosphor whose decay time is relatively long and the phosphor for producing light outside of the visible range (infrared rays or ultraviolet rays) may be a phosphor whose decay time is relatively short, the occurrence of flicker on the picture screen can be avoided and address detection can be carried out with high sensitivity, thus resulting in great practical advantage.

## Claims

1. A method for producing a phosphor screen (4) of a cathode ray tube, the method comprising the steps of forming a photo-sensitive material layer (2) with a predetermined pattern on the inner surface of a panel (1) of the cathode ray tube, coating the whole of the inner surface of the panel (1), including said photo-sensitive material layer (2), with a phosphor slurry capable of producing light that can be picked up by a light pen, and removing said photo-sensitive material layer (2) to thereby form a light pen pick-up phosphor pattern (3) which is complementary to said predetermined pattern, said phosphor slurry comprising silica, polyvinyl alcohol and phosphor, characterised in that, if the amount (weight) of silica is taken as S, the amount (weight) of solid component of polyvinyl alcohol is taken as B and the amount (weight) of phosphor is taken as P, the ratio S/B is selected to lie in a range of from 1 to 15 and the ratio P/B is selected to lie in a range of from 5 to 30.

2. A method according to claim 1, wherein the light pen pick-up phosphor pattern (3) comprises a plurality of stripes which are spaced apart from one another.

3. A method according to claim 1 or claim 2, wherein, after formation of the light pen pick-up phosphor pattern (3), at least one further phosphor capable of producing visible light is deposited on the inner surface of the panel (1) in the spaces of the light pen pick-up phosphor pattern (3), the at least one further phosphor having a decay time which is long relative to that of the phosphor used to form the light pen pick-up phosphor pattern (3).

4. A method according to claim 3, wherein said at least one further phosphor comprises respective phosphors capable of producing light of the colours red, green and blue.

5. A method according to any one of the preceding claims, wherein the phosphor used to form the light pen pick-up phosphor pattern (3) is capable of producing light outside of the visible range.

## Patentansprüche

1. Verfahren zur Herstellung eines Leuchtstoff-Bildschirms (4) einer Katodenstrahlröhre, welches Verfahren Schritte enthält zum Bilden einer Schicht (2) aus lichtempfindlichem Material mit einem vorbestimmten Muster auf der inneren Oberfläche einer Frontplatte (1) der Katodenstrahlröhre, Bedecken der Gesamtheit der inneren Oberfläche der Frontplatte (1) einschließlich der Schicht (2) aus lichtempfindlichem Material mit einer Schlämme aus Leuchtstoff-Material, das in der Lage ist, Licht zu erzeugen, welches von einem Lichtgriffel aufgenommen werden kann, und Entfernen der Schicht (2) auf lichtempfindlichem Material, um dadurch ein Lichtgriffelabtast-Leuchtstoffmuster (3) zu bilden, das komplementär zu dem vorbestimmten Muster ist, wobei die Schlämme aus Leuchtstoff-Material Kieselerde, Polyvinylalkohol und Phosphor enthält, dadurch gekennzeichnet, daß wenn die Menge (das Gewicht) der Kieselerde mit S angenommen ist, die Menge (das Gewicht) des festen Bestandteils des Polyvinylalkohols mit B angenommen ist und die Menge (das Gewicht) von Phosphor mit P angenommen ist, das Verhältnis S/B so ausgewählt ist, daß es ein einem Bereich von 1 bis 15 liegt, und das Verhältnis P/B so ausgewählt ist, daß es in einem Bereich von 5 bis 30 liegt.

2. Verfahren nach Anspruch 1, bei dem das Lichtgriffelabtast-Leuchtstoffmuster (3) eine Vielzahl von Streifen enthält, die einen Abstand voneinander aufweisen.

3. Verfahren nach Anspruch 1 oder 2, bei dem nach der Bildung des Lichtgriffelabtast-Leuchtstoffmusters (3) zumindest ein weiteres Leuchtstoff-Material, das in der Lage ist, sichtbares Licht zu erzeugen, auf der inneren Oberfläche der Frontplatte (1) in den Zwischenräumen des Lichtgriffelabtast-Leuchtstoffmusters (3) abgelagert wird, wobei das zumindest eine weitere Leuchtstoff-Material eine Nachleuchtzeit hat, die lang relativ zu derjenigen des Leuchtstoff-Materials ist, das ver-

wendet wird, um das Lichtgriffelabtast-Leuchtstoffmuster (3) zu bilden.

4. Verfahren nach Anspruch 3, bei dem das zumindest eine weitere Leuchtstoff-Material jeweilige Leuchtstoffarten enthält, die in der Lage sind, Licht der Farben Rot, Grün und Blau zu erzeugen.

5. Verfahren nach einem der vorhergehenden Ansprüche, bei dem das Leuchtstoff-Material, das verwendet wird, um das Lichtgriffelabtast-Leuchtstoffmuster (3) zu bilden, in der Lage ist, Licht außerhalb des sichtbaren Bereichs zu erzeugen.

**Revendications**

1. Procédé de production d'un écran luminescent (4) pour tube à rayons cathodiques, le procédé comprenant les opérations consistant à forme une couche de matériau photosensible (2) ayant une configuration prédéterminée sur la face interne du panneau (1) du tube à rayons cathodiques, à déposer sur la totalité de la face interieure du panneau (1), y compris sur ladite couche de matériau photosensible (2), une pâte de luminophore susceptible de produire une lumière qui peut être détectée par un photostyle, et à retirer ladite couche de matériau photosensible (2) de manière à former une configuration de luminophore (3) détectable par photostyle qui est complémentaire de ladite configuration prédéterminée, ladite pâte de luminophore comprenant de la silice, de l'alcool polyvinylique et le luminophore, caractérisé en ce que, si l'on prend S pour la quantité (poids) de silice, B pour la quantité (poids) de l'alcool polyvinylique sous forme de composant solide, et P pour la quantité (poids) de luminophore, on choisit le rapport S/B de façon qu'il se trouve dans l'intervalle de 1 à 15 et on choisit le rapport P/B de façon qu'il se trouve dans l'intervalle de 5 à 30.

2. Procédé selon la revendication 1, où la configuration de luminophore (3) détectable par photostyle comprend plusieurs bandes qui sont mutuellement séparées les unes de autres.

3. Procédé selon la revendication 1 ou 2, où, après formation de la configuration de luminophore (3) détectable par photostyle, on dépose au moins un luminophore supplémentaire susceptible de produire de la lumière visible sur la face interne du panneau (1) dans les espaces de la configuration de luminophore (3) détectable par photostyle, cette couche ou ces couches supplémentaires ayant un temps d'extinction qui est long par rapport à celui du luminophore utilisé pour former la configuration de luminophore (3) détectable par photostyle.

4. Procédé selon la revendication 3, où ledit ou lesdits luminophores supplémentaires sont constitués de luminophores respectifs susceptibles de produire de la lumière dans les couleurs rouge, verte et bleue.

5. Procédé selon l'une quelconque des revendications précédentes, où le luminophore utilisé pour former la configuration de luminophore (3) détectable par photostyle est susceptible de produire une lumière extérieure à la gamme visible.

FIG. 1

FIG. 2

FIG. 3

FIG. 4

FIG. 5